# EUROPEAN PATENT SPECIFICATION

(11) **EP 1 360 918 B1**
(45) Date of publication and mention of the grant of the patent: **04.04.2007**
(21) Application number: 03009685.3
(22) Date of filing: 30.04.2003
(51) Int. Cl.: A47J 31/00, A47J 31/36, A47J 31/56

(54) **Espresso coffee machine with a plurality of dispensing units**
Espressokaffeemaschine mit mehreren Ausgabeeinheiten
Machine à café espresso avec plusieurs unités de distribution

(30) Priority: 07.05.2002 IT MI20020244 U
(43) Date of publication of application: 12.11.2003
(73) Proprietor: Dalla Corte S.r.l., 20158 Milano (IT)
(72) Inventor: Dalla Corte, Bruno, 20158 Milano (IT)
(74) Representative: Frignoli, Luigi

(56) References cited:
- US-A- 4 757 753
- US-A- 5 259 297
- US-A- 5 408 917

## Description

The present invention relates to an espresso coffee machine with at least two coffee dispensing units.

Espresso coffee is a drink instantly obtained using a coffee machine, which passes hot water through a layer of ground coffee contained within a metal filter.

The water passing through the coffee layer must be heated to a temperature not greater than 95°C and its pressure must be between 8 and 10 bar depending on the type of coffee mixture used.

The first espresso coffee machines comprised a large boiler and individual coffee dispensing units which, when required, dipped directly into the hot water (maintained at a steam pressure of about 3 bar and a temperature of about 140°C) to make the coffee: this system was considered inadequate because to obtain a good coffee in a cup, the delivery pressure had to be increased to 9 bar and the water temperature had not to exceed about 95°C. For this reason, espresso coffee machines were constructed with a double hydraulic circuit, one for the boiler and the other for the coffee dispensing units. This boiler cannot operate below about 120°C if it is to produce steam deliverable separately into cups containing milk to be emulsified by the steam in order to give a so-called "cappuccino". The two circuits (one to make the espresso coffee and the other to deliver steam or hot water) are interconnected via a heat exchanger, because to heat the coffee dispensing units use is made of the heat generated in the boiler, which is heated by an electrical resistance element controlled by a thermostat.

A different type of espresso coffee machine also exists in which two separate boilers are provided, one to generate the steam and to produce hot water usable for infusions (of tea, camomile, etc.) and the other to directly heat the water fed to the coffee dispensing units.

In known coffee machines the boiler capacity varies on the basis of the number of dispensing units which the coffee machine possesses, as each unit requires an energy quantity such as to maintain the temperature of the water contained in it at its optimum value and such as to enable the desired number of espresso coffees to be dispensed.

The US-A-4757753 and the US-A-5408917 describe espresso coffee machines having dispensing devices (2, 14; and respectively 24, 39) which are connected, by hot water tubes, with distinct and separate hot water generators or tanks (5; 32) each one containing a volume of water which is much higher than that of the water (corresponding to that of a cup to be filled with an espresso coffee which may be percolated into it, as specified in lines 16-21, col. 5 of the US-A-5408917) which can be received within the respective dispensing device. The drawbacks of such machines are that the time and power necessary for heating the large volumes of water contained in the hot water generators are necessarily relatively high; that the temperature of the water fed to the dispensing devices cannot be varied or changed in a short time whenever the quality or thickness of the ground coffee present in the filter of the percolator devices varies, with the consequence that espresso coffees of good quality cannot be obtained; that if the dispensing devices are not used in a substantially continuous way, they rapidly become cold, thus cooling water fed to them from the hot water generators when an espresso coffee has to be made; and that the total external surface of the hot water generators, of the dispensing devices and of the tubes connecting them together is necessarily relatively high, with consequent high heat dispersion and energy consumption.

All known coffee machines commonly used present the serious drawback of always maintaining the hot water generators for the dispensing units at the desired temperature and hence they consume energy even when not in use, this often happening for many hours in succession, with a consequent considerable energy wastage.

In this respect, most bar-type coffee machines (which comprise a plurality of dispensing units) are used mostly during only two periods of the day, i.e. during the first hours of the morning and during the initial hours of the afternoon, however the machine has to remain switched on and ready to dispense during all the other periods of the day.

Another drawback of machines of known type is that the temperature of the water present in each dispensing unit is the same, which limits the ability to obtain good espresso coffee if the coffee mixture used differs from one unit to another (for example one unit uses decaffeinated coffee) and if one dispensing unit is used to make a single coffee rather than two coffees. In this respect, the filters used to produce a single coffee contain a quantity of ground coffee less than that required to make two coffees, which means that the thickness of the ground coffee present in the filters in the two cases is different, and is greater if preparing two coffees. As the quality of the espresso coffee obtained must be identical in the two cases, it is apparent that if producing single coffee the water temperature must be greater than the temperature of the water used to produce two coffees (where the thickness of the coffee present in the filter is greater), however this does not happen with known machines in which the water temperature is always the same in each one of the various units, with the result that a single coffee dispensed from said unit is always under-extracted whereas two coffees are over-extracted.

The US-A-5259297 concerns an espresso coffee machine suitable to have the water required for espresso coffee making heated instantaneously and individually: no water heating boiler or the like are provided. Each dispensing body is associated with a heater suitable to instantaneously and individually heat the water for said body. The heater comprises a resistor embedded in a single casting of aluminium which is juxtaposed to the dispensing body and located above the latter (see col. 2, lines 36-43) in such a way that, when the machine is activated, the optimum temperature for dispensing an espresso coffee of good quality is reached in the 3 to 7 seconds range (see col. 3, lines 55-61). It is obvious that one of the main drawbacks of the above mentioned machine is that the maximum installed power must necessarily be very high.

The main object of the present invention is to provide an espresso coffee machine with a plurality of dispensing units which are mutually independent thermally and in particular are such that the temperature of the water within each unit can be rapidly brought and controlled to a desired value with low energy consumption and requiring a low maximum installed power.

This and other objects are attained by an espresso coffee machine having the features specified in claim 1.

Preferably at least one of said thermostats is adjustable manually, the machine comprising a boiler independent of the dispensing units and provided with a respective resistance element with relative switch and thermostat to produce steam and superheated water which can be withdrawn via dedicated cocks.

The structure and characteristics of the espresso coffee machine will be more apparent from the ensuing description of a preferred embodiment thereof given with reference to the accompanying drawings, in which:
Figure 1 is a schematic representation of a machine with two dispensing units and a boiler for steam generation, and:
Figure 2 is a schematic longitudinal section through a dispensing unit.

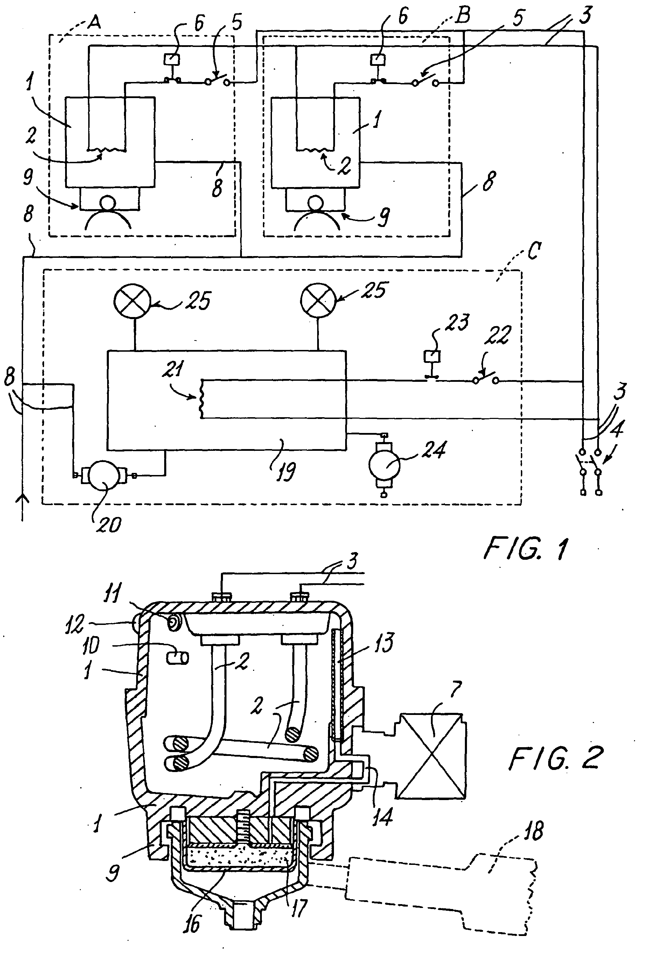

Reference will firstly be made to Figure 1 which shows schematically an espresso coffee machine comprising two separate identical dispensing units (enclosed within two dashed-line rectangles indicated by A and B) and a boiler for generating steam and hot water (enclosed within the dashed-line rectangle indicated by the letter C).

Each dispensing unit comprises a boiler 1 housing an electrical resistance element 2 connected to the electrical supply mains 3 in which a main switch 4 is provided. A switch 5 and a thermostat 6 are provided in one of the two wires by which each resistance element 2 is connected to the mains 3. The cavity of each boiler 1 is directly connected to the domestic water supply 8 by which cold water is fed under pressure.

At the lower end of the boiler 1 of each dispensing unit there is provided a filter holder with dispensing spouts indicated by the reference numeral 9 in Figure 1 and shown in greater detail in Figure 2.

The structure of each dispensing unit, which are identical and for which the same reference numerals have been used in the figures, is shown in greater detail in Figure 2 in which it can be seen that a probe 10 forming part of the thermostat 6 projects into the cavity of the boiler 1. In the same cavity of the boiler 1 there open the end 11 of a pipe 12 forming part of the water supply 8 and the upper end of a tube 13 communicating with a conduit 14 intercepted by a solenoid valve 7 and opening at the filter holder 9 which maintains a filter 16 containing ground coffee indicated by the reference numeral 17 connected to the boiler 1.

The filter holder 9, the filter 16, the operating grip 18 for the filter holder and the entire lower part of the dispensing unit are of traditional structure and no further description thereof is required.

Again with reference to Figure 1, this shows schematically a boiler 19, also connected to the water supply 8 via a solenoid valve 20 and housing an electrical resistance element 21 which is connected to the said electrical mains 3 via a switch 22 and a thermostat 23.

The lower part of the boiler 19 is connected to a solenoid valve 24 for hot water withdrawal, whereas its upper part is connected to cocks 25 through which steam can be withdrawn. The presence of the boiler 19 is preferable but is not strictly necessary for implementing the present invention.

To understand the operation of each of the two dispensing units A and B (which are identical but mutually independent, except for the connection to the pressurized cold water source) it will be assumed that the boiler 1 is filled with water and the switch 5 is closed (the switch 4 also being closed) to hence heat the water contained in the boiler by means of the resistance element 2, until the desired temperature controlled by the thermostat 6 via the probe 10 is attained. When hot water is to be withdrawn from the boiler 1 to make an espresso coffee, the solenoid valve 7 is opened and the water descends along the tube 13 and the conduit 14, passes through the layer of coffee 17 contained in the filter 16 and descends into the cups through the spouts with which the filter holder 9 is provided.

As an espresso coffee is being dispensed, new cold water arrives in the boiler and is heated very rapidly because the boiler volume is small.

As already stated, the different dispensing units forming part of the coffee machine operate and are usable separately from each other, i.e. the temperature of the water in boilers 1 of different dispensing units can be different from each other, which temperature can be selected and set manually if the thermostats 6 are of adjustable type, in particular of electronic type enabling temperature to be adjusted to one tenth of a degree.

It should be noted that the presence of the boiler 19 (from which steam and hot water can be withdrawn) is preferred and its operation is totally independent of the operation of the dispensing units A and B.

The described coffee machine enables all (or only some or only one) of the espresso coffee dispensing units to be heated and maintained at the desired temperature, with evident saving in electrical energy when only one or some of the dispensing units are to be used. It should be noted that although the volume of each boiler 1 is small, the desired temperature is attained rapidly in each boiler 1 and hence when considered necessary, the user can deactivate one or more dispensing units and reactivate them only a few minutes prior to use.

This is extremely important compared with what happens with known coffee machines which require at least one hour to heat up, with the result that most users of coffee machines with more than one dispensing unit leave the machine switched on throughout the night, with consequent considerable wastage of electrical energy.

The fact that the temperature of each dispensing unit can be adjusted independently of the other units makes it possible to optimize coffee extraction on the basis of whether a single coffee or two coffees are to be dispensed. This advantage is important because this characteristic enables each dispensing unit of the machine to be used with coffee mixtures having very different characteristics. It should be noted that the fact that the dispensing units A, B are independent of the boiler 19 for steam formation enables simple and rapid maintenance to be carried out on each dispensing unit or on the boiler 19 without having to take the machine to the service centre, as happens now.

Finally, it can be seen that the volume of the boiler 19 (if provided in the machine) is much smaller than that of boilers in known machines, where such boilers act as a theoretical energy accumulator for the dispensing units and not only to produce steam for making cappuccinos and hot water for infusions, as happens with the machine according to the present invention.

## Claims

1. An espresso coffee machine with a plurality of dispensing units (A, B) all connected to a source (8) of cold water under pressure and provided with a solenoid valve (7) to intercept the water to be delivered, each dispensing unit (A, B) comprising a separate boiler (1) connected to said source (8) of water and containing an electrical resistance element (2) connected to the electrical supply mains (3) via a separate switch (5) and separate thermostat (6),
**characterized in that** at the lower end of said boiler (1) there is provided a holder (9) for retaining a filter (16) for ground coffee (17) connected to it.

2. An espresso coffee machine as claimed in claim 1, **characterised by** comprising a boiler (19) independent of the dispensing units (A, B) and provided with a respective resistance element (21) with relative switch (22) and thermostat (23) to produce steam and superheated water which can be withdrawn via dedicated cocks (24).

## Patentansprüche

1. Espressomaschine mit mehreren Abgabeeinheiten (A, B), die alle an eine unter Druck stehende Kaltwasserquelle (8) angeschlossen und mit einem Magnetventil (7) zum Abstellen des abzugebenden Wassers versehen sind, wobei jede Abgabeeinheit (A, B) einen separaten Heißwasserbereiter (1) umfasst, der an die Wasserquelle (8) angeschlossen ist und ein Widerstandselement (2) enthält, das über einen separaten Schalter (5) und einen separaten Thermostat (6) an das Stromnetz (3) angeschlossen ist, **dadurch gekennzeichnet, dass** das untere Ende des Heißwasserbereiters (1) mit einer Haltevorrichtung (9) versehen ist, die einen daran angeschlossenen Filter (16) für gemahlenen Kaffee (17) hält.

2. Espressomaschine nach Anspruch 1, **dadurch gekennzeichnet, dass** sie einen von den Abgabeeinheiten (A, B) unabhängigen Heißwasserbereiter (19) umfasst, der mit einem entsprechenden Widerstandselement (21) mit entsprechendem Schalter (22) und Thermostat (23) versehen ist und Wasserdampf und überhitztes Wasser erzeugt, die über dafür vorgesehene Hähne (24) entnommen werden können.

## Revendications

1. Machine à café espresso équipée de plusieurs unités de distribution (A, B) toutes connectées à une source (8) d'eau froide sous pression et prévue avec une électrovanne (7) pour intercepter l'eau à amener, chaque unité de distribution (A, B) comprenant une chaudière séparée (1) connectée à ladite source (8) d'eau et contenant un élément de résistance électrique (2) relié au câblage d'alimentation électrique (3) via un interrupteur séparé (5) et un thermostat séparé (6),
**caractérisée en ce que**, à l'extrémité inférieure de ladite chaudière (1), est prévu un support (9) pour maintenir un filtre (16) à café moulu (17) relié à celle-ci.

2. Machine à café espresso selon la revendication 1, **caractérisée en ce qu'**elle comprend une chaudière (19) indépendante des unités de distribution (A, B) et pourvue d'un élément de résistance respectif (21) avec un interrupteur respectif (22) et un thermostat (23) pour produire de la vapeur et de l'eau surchauffée qui peuvent être évacuées via des robinets (24) dédiés.
